# EUROPÄISCHE PATENTSCHRIFT

(11) **EP 2 298 552 B1**
(45) Veröffentlichungstag und Bekanntmachung des Hinweises auf die Patenterteilung: **03.07.2013**
(21) Anmeldenummer: 11150289.4
(22) Anmeldetag: 28.09.2007
(51) Int. Cl.: B41F 5/18, B41F 5/24, B41F 13/14, B41F 33/00, G01B 11/24, B41F 5/20, B41F 7/18, B41F 9/04, B41F 13/02, B41F 13/12, B41F 13/34, B41F 13/38, B41F 31/30, B41C 1/10

(54) **Montagestell und Verfahren zum Einstellen einer Walze**
Mounting rack and method for adjusting a cylinder
Châssis de montage et procédé pour ajuster un de ses cylindres

(30) Priorität: 23.10.2006 EP 06022135; 19.12.2006 DE 102006060464; 30.03.2007 DE 202007004717 U
(43) Veröffentlichungstag der Anmeldung: 23.03.2011
(62) Teilanmeldung aus: 07818538.6
(73) Patentinhaber: Bobst Bielefeld GmbH, 33609 Bielefeld (DE)
(72) Erfinder: Whitelaw, Gordon, Bigola, NSW 2107 (AU); Kückelmann, Andreas, 49479 Ibbenbüren (DE); Grauthoff, Georg Dr., 1025 St-Sulpice (CH)
(74) Vertreter: Ter Meer Steinmeister & Partner

(56) Entgegenhaltungen:
- EP-A- 1 048 461
- DE-A1- 10 357 430
- DE-A1- 19 755 487
- DE-C1- 3 136 703
- JP-A- 2006 256 175
- JP-A- 2006 256 176
- US-A1- 2004 114 125
- US-A1- 2005 247 219

## Beschreibung

Die Erfindung betrifft ein Verfahren zum Einstellen einer Walze in einer Rotationsdruckmaschine.

Die einzustellende Walze kann z.B. ein Druckzylinder oder eine Druckzylinderhülse (Sleeve) in einer Flexodruckmaschine, einer Tiefdruckmaschine oder einer Offsetdruckmaschine sein, oder etwa eine Rasterwalze in einer Flexodruckmaschine. Ein Parameter, der für eine solche Walze eingestellt werden muss, kann die Kraft oder der Druck sein, mit der oder mit dem die Umfangsfläche der Walze radial gegen ein anderes Bauteil der Druckmaschine angestellt wird, z.B. gegen einen Gegendruckzylinder, wenn die einzustellende Walze ein Druckzylinder ist, oder gegen einen Druckzylinder, wenn die einzustellende Walze eine Rasterwalze ist. Dieser Druckparameter kann für die beiden entgegengesetzten Seiten der Druckmaschine, die als Antriebsseite und Bedienungsseite bezeichnet werden, individuell definiert sein. Zumindest im Fall eines Druckzylinders werden die einzustellenden Parameter typischerweise auch das Längsregister und das Seitenregister umfassen.

In einer herkömmlichen Druckmaschine erfolgt die Einstellung dieser Parameter elektronisch durch geeignete Ansteuerung von Aktoren oder Servomotoren. Nichtsdestoweniger ist noch ein menschlicher Eingriff erforderlich, um das Resultat der Einstelloperation durch visuelle Inspektion des gedruckten Bildes zu bewerten und um Befehle zur Korrektur der Einstellungen einzugeben. Die Einstelloperation erfolgt gewöhnlich in einer Andruckphase, wenn eine neue Walze oder ein neuer Walzensatz in der Druckmaschine montiert worden ist und die Maschine gestartet wurde, um Bilder auf eine Bedruckstoffbahn zu drucken. Folglich wird eine beträchtliche Menge an Makulatur produziert, bevor die Einstelloperation abgeschlossen ist und eine zufriedenstellende Qualität der gedruckten Bilder erreicht ist. In einer modernen Hochgeschwindigkeits-Druckmaschine kann die Menge der in dieser Weise in dem Einstellprozess nach dem Prinzip von Versuch und Irrtum produzierten Makulatur sehr groß werden und etwa 600 m oder mehr je Drucklauf betragen. Dies bedeutet nicht nur eine Verschwendung von Bedruckstoffmaterial, sondern auch einen Zeitverlust und damit eine beträchtliche Verminderung der Produktivität der Druckmaschine, insbesondere wenn die mit einem gegebenen Walzensatz ausgeführten Druckläufe verhältnismäßig kurz sind.

Es sind verschiedene Ansätze verfolgt worden, die Einstellung oder Anstellung der Walzen einer Druckmaschine hinsichtlich Längsregister, Seitenregister und Druck zu beschleunigen und zu automatisieren. Zum Beispiel beschreibt EP 1 249 346 B1 ein System und Verfahren zur automatischen Druckstellung, bei dem die visuelle Inspektion der gedruckten Bilder mit dem menschlichen Auge durch eine elektronische Bilderkennung und eine automatische Regelung der Druckeinstellungen auf der Grundlage dieser Bilderkennung ersetzt wird. Dennoch erfordert die Einstellprozedur eine beträchtliche Zeit und führt damit zur Produktion von Makulatur.

Ein Verfahren mit den im Oberbegriff des Anspruchs 1 angegebenen Merkmalen wird in DE 41 21 749 A1 beschrieben. Bei diesem Verfahren wird die Oberfläche der Walze mit einem Lineal abgetastet, und es wird die Position des Lineals gemessen.

Aus DE-C-31 36 703 ist ein Abtastsystem bekannt, mit dem innerhalb der Druckmaschine Paßmarken abgetastet werden, die zum Zweck der Registersteuerung auf den Druckplatten einkopiert sind.

DE-A-197 55 487 beschreibt ein System zur Herstellung einer Teilungsstruktur auf einem Druckzylinder. Dabei werden Abstände auf der Oberfläche der Druckzylinders in Umfangsrichtung mit einer Tastrolle vermessen, die auf dieser Oberfläche abrollt

Es ist eine Aufgabe der Erfindung, ein Verfahren und eine Vorrichtung anzugeben, die es erlauben, die Produktion von Makulatur und die für den Einstellprozess in der Andruckphase eines Drucklaufes benötigte Zeit zu eliminieren oder zumindest zu verringern.

Diese Aufgabe wird gelöst durch ein Verfahren gemäß Anspruch 1 und ein Montagegestell gemäß Anspruch 2. Bei dem Verfahren gemäß der Erfindung wird der auf dem Prinzip von Versuch und Irrtum beruhende Einstellprozess durch eine direkte Steuerung der Einstellparameter auf der Grundlage von Einstelldaten ersetzt, die vorab in einem Vorbereitungsschritt außerhalb der Druckmaschine gewonnen wurden. Wenn die Walze in der Druckmaschine montiert worden ist, kann sie folglich unmittelbar vor dem Druckbeginn auf der Grundlage der Einstelldaten eingestellt werden, so dass von Anfang an eine optimale Qualität des gedruckten Bildes erreicht wird und der Druckprozess sofort und ohne Material- und Zeitverlust beginnen kann.

Um die Einstelldaten für die Einstelloperation zu gewinnen, wird die Walze zunächst in einem Vorbereitungsgestell montiert, bei dem es sich z.B. um einen sogenannten Mounter handeln kann, der typischerweise dazu verwendet wird, Druckplatten auf einem Druckzylinder oder einer Druckzylinderhülse zu montieren. In einer Ausführungsform weist die Walze eine Referenzmarke auf, so dass es durch Detektion dieser Referenzmarke, wenn die Walze in dem Vorbereitungsgestell montiert ist, möglich ist, eine Referenz für die axiale Position und die Winkelstellung der Walze zu erhalten und die Walze präzise zu positionieren, bevor (im Fall eines Druckzylinders) die Druckplatten darauf montiert werden. Dann wird die Topographie der Oberfläche der Walze detektiert, indem die Umfangsfläche der Walze mit einer Tastrolle abgetastet wird, die die Form der Walzenoberfläche oder, genauer, der Oberfläche der Druckplatten detektiert, sofern es sich bei der Walze um einen Druckzylinder mit darauf montierten Druckplatten handelt. Die auf diese Weise erhaltenen Topographiedaten geben die Höhe von spezifischen Punkten auf der Oberfläche der Walze an, d. h., den Radius oder den Abstand der betreffenden Oberflächenpunkte von der Drehachse der Walze. Die spezifischen Punkte sind in einem Koordinatensystem gegeben, das auf der Grundlage der Referenzmarke definiert ist. Natürlich ist es möglich, die Reihenfolge der Schritte umzukehren und zunächst die Topographie in einem gestellfesten Koordinatensystem zu detektieren, das dann in ein walzenfestes Koordinatensystem transformiert wird, nachdem die Referenzmarke detektiert worden ist.

Die Topographiedaten können die Form einer Karte haben, die jedem Punkt auf der Oberfläche der Walze einen bestimmten Höhenwert zuordnet. Somit können die Topographiedaten nicht nur die Form der Walzenoberfläche insgesamt, einschließlich ihrer Exzentrizität, Konizität und Balligkeit widerspiegeln, sondern auch die Verteilung von erhöhten und vertieften Oberflächenbereichen, die, z. B. im Falle eines Druckzylinders, die Bildinformation auf der Druckplatte repräsentieren.

Die Topographiedaten liefern die nötige Information zur Berechnung der Einstelldaten für eine automatische Einstellung oder Anstellung der Walze in der Druckmaschine.

Zum Beispiel geben die Topographiedaten im Fall eines Druckzylinders die genaue Lage der Druckplatten relativ zu der Referenzmarke an. Wenn die Referenzmarke detektiert wird, nachdem die Walze in der Druckmaschine montiert worden ist, kann man folglich einen Einstellwert für eine axiale Position der Walze in der Druckmaschine so bestimmen, dass diese axiale Position das korrekte Seitenregister ergibt. Ebenso ist es möglich, einen Einstellwert für eine Winkelvoreilung oder -nacheilung der Walze in Rotationsrichtung so zu bestimmen, dass die Voreilung oder Nacheilung das richtige Längsregister ergibt. Das gleiche gilt entsprechend für andere Typen von Walzen, die eine korrekte Einstellung des Längsregisters und/oder Seitenregisters erfordern. Wenn es für eine korrekte Einstellung des Druckzylinders nicht nötig ist, die gesamte Topographie des Druckzylinders zu kennen, so kann gemäß einer Variante der Erfindung der Abtastschritt durch einen Schritt ersetzt werden, in dem nur die räumliche Beziehung zwischen dem Druckmuster und der Referenzmarke bestimmt wird.

Andererseits erlaubt es z. B. im Fall eines Druckzylinders oder einer Rasterwalze für Flexodruck die Information über die geometrische Gestalt der Walzenoberfläche insgesamt, gegebenenfalls in Kombination mit dem Verhältnis zwischen den erhöhten (druckenden) und vertieften (nicht druckenden) Oberflächenbereichen, einen Einstellwert für den optimalen Druck abzuleiten, mit dem die Walze gegen ein damit zusammenwirkendes Bauteil der Druckmaschine angedrückt wird. Dieser Einstellwert kann z. B. als eine Kraft ausgedrückt werden, mit der die Walze gegen das damit zusammenwirkende Bauteil angedrückt wird, oder als ein Liniendruck (Kraft pro Längeneinheit des zwischen der Walze und dem damit zusammenwirkenden Bauteil gebildeten Spaltes) oder auch als eine Position der Drehachse der Walze längs einer vorbestimmten Achse, längs derer die Walze gegen das damit zusammenwirkende Bauteil angestellt oder von diesem abgerückt werden kann. Zum Beispiel erlauben es die Topographiedaten, zwei Werte, je einen für jedes Ende der Walze, für den (kleinsten) Radius der Walze zu bestimmen, und diese Werte können dann dazu benutzt werden, die optimalen Anstellpositionen zu bestimmen. Der optimale Einstellwert für die Kraft oder den Liniendruck wird naturgemäß von einer Vielzahl von Faktoren abhängen, etwa von den elastischen Eigenschaften der Oberfläche der Walze und des damit zusammenwirkenden Bauteils, der Zusammensetzung der Tinte, den Eigenschaften des Bedruckstoffes und dergleichen. Wenn der Einstellwert als eine Einstellposition angegeben ist, können auch Faktoren wie die Steifigkeit des Maschinengestells und der Lagerstruktur für die Walzen berücksichtigt werden. Für einen gegebenen Einbauort der Walze in der Druckmaschine kann der Einfluss dieser Faktoren auf den optimalen Einstellwert vorab in einer Kalibrierungsprozedur bestimmt werden, die zu einem Satz von Kalibrierungsdaten führt, die dann zusammen mit den Topographiedaten einer spezifischen Walze dazu benutzt werden können, die optimalen Einstellungen für diese Walze zu bestimmen.

Nachdem die vorbereitenden Schritte einmal ausgeführt worden sind, die Walze in der Druckmaschine montiert worden ist und die Referenzmarke detektiert worden ist, können somit sofort die notwendigen Einstellungen vorgenommen werden, um eine optimale Druckqualität zu erreichen, ohne dass irgendwelche Prozeduren nach dem Prinzip von Versuch und Irrtum benötigt werden.

In einer Ausführungsform kann die einzustellende Walze ein Druckzylinder oder eine Druckzylinderhülse mit darauf montierten Druckplatten sein. Bei der Anbringung der Druckplatten ist dann eine hohe Genauigkeit nur für die schräglagenfreie Ausrichtung der Druckplatten mit der Axialrichtung der Walze erforderlich, wohingegen die Montagepositionen der Druckplatten in axialer Richtung und Umfangsrichtung der Walze weniger kritisch sind. Die Positionsdaten relativ zu der Position der Referenzmarke auf der Walze können mit hoher Genauigkeit auf der Grundlage der erfindungsgemäß detektierten Topographiedaten bestimmt werden, so dass Abweichungen in der axialen Position oder Winkelstellung der Druckplatten dann bei der Einstellung des Seitenregisters und des Längsregisters innerhalb der Druckmaschine kompensiert werden können. Auf diese Weise erleichtert die Erfindung auch den Prozess der Anbringung der Druckplatten auf der Walzenoberfläche.

Weiterhin kann die Hardware, die zum Detektieren der Topographie der Walze benötigt wird, zweckmäßig in ein herkömmliches Montagegestell, einen sogenannten Mounter, integriert werden, der zum Montieren der Druckplatten benutzt wird. Unter diesem Gesichtspunkt hat die Erfindung auch ein solches Montagegestell zum Gegenstand, wobei das Montagegestell auch einen Detektor zum Detektieren einer Referenzmarke auf dem Druckzylinder oder der Druckzylinderhülse aufweist.

Vorteilhafte Ausführungsformen der Erfindung werden nun anhand der Zeichnungen erläutert, in denen zeigen.
- Fig. 1: eine schematische Ansicht einer Rotationsdruckmaschine und eines zugehörigen Vorbereitungsgestells;
- Fig. 2: einen schematischen waagerechten Schnitt durch wesentliche Teile eines einzelnen Farbdecks in der Druckmaschine nach Fig. 1;
- Fig. 3 bis 6: Teil-Querschnitte von Druckzylindern, die in unterschiedlichen Ausführungsformen der Erfindung verwendet werden.Fig. 7 ein Blockdiagramm eines erfindungsgemäßen Verfahrens;
- Fig. 8: ein Blockdiagramm zusätzlicher Verfahrensschritte, die nach dem Beginn des Drucklaufes ausgeführt werden können;
- Fig. 9: ein Vorbereitungsgestell gemäß einer Ausführungsform der Erfindung; und
- Fig. 10: eine Prinzipskizze eines mechanischen Abtastsystems.

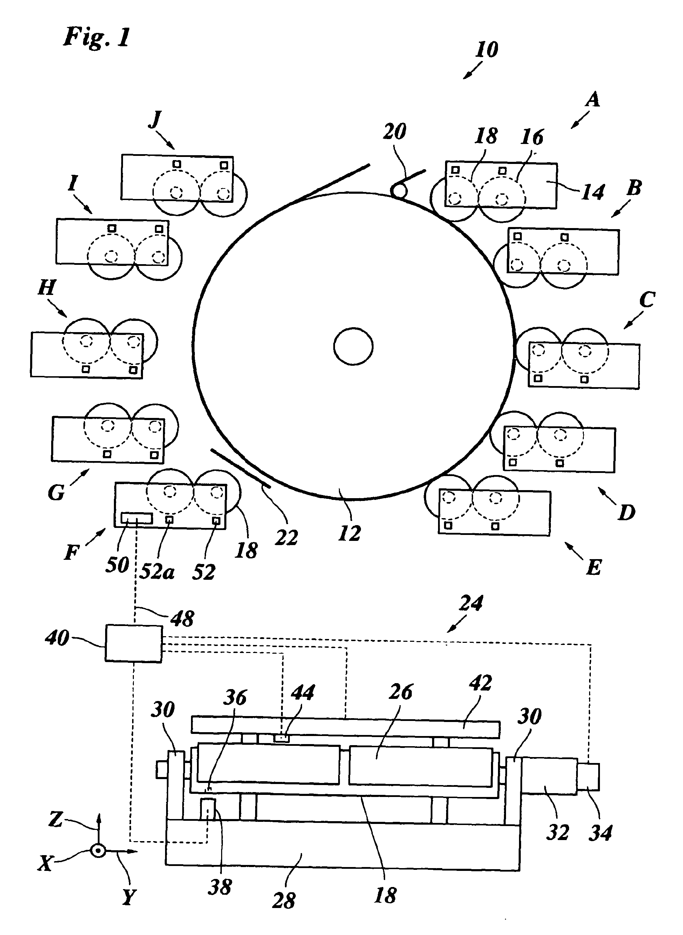

Als ein Beispiel für eine Druckmaschine, bei der Erfindung anwendbar ist, zeigt Fig. 1 eine bekannte Flexodruckmaschine mit einem zentralen Gegendruckzylinder (CI) 12 und zehn Farbdecks A-J, die um den Umfang des CI herum angeordnet sind. Jedes Farbdeck weist ein Gestell 14 auf, in dem eine Rasterwalze 16 und ein Druckzylinder 18 drehbar und einstellbar gelagert sind. Wie allgemein bekannt ist, wird die Rasterwalze mit Hilfe eines Einfärbungssystems und/oder einer Kammerrakel (nicht gezeigt) eingefärbt, und sie kann gegen den Druckzylinder 18 angestellt werden, so dass die Farbe auf die Umfangsfläche des Druckzylinders 18 übertragen wird, der ein Druckmuster trägt.

Eine Bahn 20 eines Bedruckstoffs läuft um den Umfang des CI 12 und bewegt sich somit an jedem der Farbdecks A-J vorbei, wenn der CI rotiert.

In Fig. 1 sind die Farbdecks A-E im aktiven Zustand gezeigt. In diesem Zustand werden die Rasterwalzen 16 und die Druckzylinder 18 so angetrieben, dass sie mit einer Umfangsgeschwindigkeit rotieren, die mit derjenigen des CI 12 identisch ist, und der Druckzylinder 18 ist gegen die Bahn 20 auf der Umfangsfläche des CI 12 angestellt, so dass ein Bild, das den jeweiligen Druckmustern entspricht, auf die Bahn 12 gedruckt wird. Jedes der Farbdecks A-E arbeitet mit einer bestimmten Farbe, so dass entsprechende Farbauszugsbilder eines gedruckten Bildes auf der Bahn 20 überlagert werden, wenn sie durch die Spalte zwischen dem CI 12 und den verschiedenen Druckzylindern 18 der aufeinanderfolgenden Farbdecks hindurchläuft. Es ist ein besonderer Vorteil einer Druckmaschine mit einer CI-Architektur, wie sie in Fig. 1 gezeigt ist, dass das Farbregister der von den verschiedenen Farbdecks erzeugten Farbauszugsbilder zuverlässig eingehalten werden kann, weil die Bahn stabil auf einem einzigen Element, nämlich dem CI 12 abgestützt ist.

In dem in Fig. 1 gezeigten Zustand sind die übrigen fünf Farbdecks F-J nicht aktiv, und ihre Druckzylindern sind von der Bahn 20 abgestellt. Während die Druckmaschine läuft, können diese Farbdecks F-J für einen nachfolgenden Druckauftrag vorbereitet werden, indem die Druckzylinder 18 und ggf. auch die Rasterwalzen 16 ausgewechselt werden. Wie in Fig. 1 beispielhaft für das Farbdeck F dargestellt ist, wurde ein Schutzschild 22 in eine Position zwischen dem CI 12 und dem Druckzylinder 18 dieses Farbdecks gebracht, und zusätzliche Schutzschilde (nicht gezeigt) sind an den Seiten der Maschine befestigt, so dass das Bedienungspersonal ohne die Gefahr von Verletzungen oder Schäden, die durch direkte Berührung des rotierenden CI 12 verursacht werden könnten, Zugang zu dem Farbdeck F hat. Obgleich dies in der Zeichnung nicht dargestellt ist, sind ähnliche Schutzschilde auch für jedes der anderen Farbdecks vorgesehen.

In Fig. 1 ist außerdem schematisch eine Frontansicht eines sogenannten Mounters gezeigt, d.h., eines Gestells, das dazu verwendet wird, einen Druckzylinder 18 vorzubereiten, bevor dieser in einem der Farbdecks, z.B. dem Farbdeck F montiert wird. Im gezeigten Beispiel wird angenommen, dass der Druckzylinder 18 von einem Typ ist, der eine oder mehrere Druckplatten 26 trägt, die auf ihrer äußeren Umfangsfläche ein Druckmuster tragen. Der Mounter 24 wird insbesondere dazu benutzt, die Druckplatten 26 beispielsweise mit Hilfe eines Klebers auf dem Druckzylinder 18 zu montieren.

Der Mounter 24 hat einen Sockel 28 und zwei lösbare Lager 30, in denen die entgegengesetzten Enden des Druckzylinders 18 drehbar gelagert sind. Als eine Alternative kann der Mounter ein verstellbares Lager und einen ausgedehnten Sockel aufweisen, so dass mit Montagedomen mit unterschiedlichen Durchmessern gearbeitet werden kann. Ein Antriebsmotor 32 ist so angeordnet, dass er an den Druckzylinder 18 gekoppelt werden kann, um diesen zu drehen, und ein Codierer 34 ist an den Antriebsmotor 32 gekoppelt, um die Winkelstellung des Druckzylinders 18 zu detektieren.

Eine Referenzmarke 36, z.B. ein Magnet, ist in den Umfang des Druckzylinders 18 eingebettet, und ein Detektor 38, der in der Lage ist, die Referenzmarke 36 zu detektieren, ist an dem Sockel 28 in einer Position angeordnet, die der axialen Position der Referenzmarke entspricht. Der Detektor 38 kann z.B. ein dreiachsiger Hall-Detektor sein, der in der Lage ist, die Position der Referenzmarke 36 präzise in einem dreidimensionalen Koordinatensystem mit den Achsen X (senkrecht zur Zeichenebene in Fig. 1), Y (parallel zur Drehachse des Druckzylinders 18) und Z (vertikal in Fig. 1) zu messen.

Wenn der Druckzylinder 18 in die in Fig. 1 gezeigte Position gedreht wird, in der die Referenzmarke 36 dem Detektor 38 zugewandt ist, misst der Detektor 38 einen Versatz der Referenzmarke 36 relativ zu dem Detektor 38 in Y-Richtung sowie einen Versatz in X-Richtung. Dieser Versatz in X-Richtung wird durch die Winkelstellung des Druckzylinders 18 bestimmt. Somit ist es selbst dann, wenn die Referenzmarke 36 nicht exakt mit dem Detektor 38 ausgerichtet ist, möglich, eine wohldefinierte Y-Position und eine wohldefinierte Winkelstellung (φ) zu bestimmen, die als ein Referenzpunkt zur Definition eines zylindrischen φ-Y-R-Koordinatensystems dienen können, das in Bezug auf den Druckzylinder 18 festliegt (die R-Koordinate ist dann der Abstand eines Punktes von der Drehachse des Druckzylinders, die durch die Lager 30 definiert wird). Die Positionsdaten, die diesen Referenzpunkt definieren, werden in einer Steuereinheit 40 des Mounters 24 gespeichert.

Es ist zu bemerken, dass die mit dem Detektor 38 gemessene Z-Koordinate der Referenzmarke 36 in den weiteren Arbeitsschritten nicht benötigt wird, aber dazu dient, etwaige Mehrdeutigkeiten oder Fehler in den Detektionssignalen zu beseitigen, die die X- und Y-Positionen der Referenzmarke 36 angeben.

Der Mounter 24 weist weiterhin eine Schiene 42 auf, die fest auf dem Sockel 28 montiert ist und sich längs der äußeren Umfangsfläche des Druckzylinders 18 in Y-Richtung erstreckt. Ein optischer Abtastkopf 44 der nicht unter den Schutzumfang von Anspruch 1 oder 2 fällt ist auf der Schiene 42 geführt und kann zu einer hin- und hergehenden Bewegung längs der Schiene 42 angetrieben werden, um die Oberfläche des Druckzylinders 18 und insbesondere die Oberflächen der Druckplatten 26 abzutasten. Die Schiene 42 enthält weiterhin einen Linearcodierer, der die Y-Position des Abtastkopfes 44 detektiert und an die Steuereinheit 40 meldet. Wenn der Druckzylinder 18 gedreht wird, zählt der Codierer 34 die Winkelinkremente und meldet sie an die Steuereinheit 40, so dass die Steuereinheit 40 jederzeit die φ- und Y-Koordinaten des Abtastkopfes 44 in dem zylindrischen Koordinatensystem bestimmen kann, das an die Referenzmarke 36 des Druckzylinders gekoppelt ist.

Der Abtastkopf 44 dient zur Messung der Höhe des Oberflächenpunktes des Druckzylinders 18 (oder der Druckplatte 26), der sich direkt unter der aktuellen Position des Abtastkopfes befindet. Die in dieser Weise bestimmte Höhe kann durch die R-Koordinate in dem zylindrischen Koordinatensystem ausgedrückt werden. Durch Drehen des Druckzylinders 18 und Bewegen des Abtastkopfes 44 längs der Schiene 42 ist es somit möglich, die gesamte Umfangsfläche des Druckzylinders 18 abzutasten und ein Höhenprofil oder eine Topographie mit hoher Genauigkeit aufzunehmen, z.B. mit einer Genauigkeit von 1 bis 2 µm. Zu diesem Zweck kann die Y-Achse des Mounters kalibriert sein, um inhärente Positionsabweichungen der Schiene 42 zu kartieren, die dann in der Steuereinheit 40 mit den Messwerten des Abtastkopfes 44 kombiniert werden, um eine genauere Topographie zu gewinnen.

Auf diese Weise kann in der Steuereinheit 40 die exakte geometrische Gestalt des Druckzylinders 18 (einschließlich der Druckplatten) mit hoher Genauigkeit bestimmt werden. Insbesondere ist es möglich zu detektieren, ob die Oberfläche des Druckzylinders einen kreisförmigen oder eher einen leicht elliptischen Querschnitt hat. Wenn ein elliptischer Querschnitt des Zylinders festgestellt wird, kann der Azimutwinkel der großen Achse der Ellipse bestimmt werden. Ebenso ist es auch dann, wenn der Querschnitt der Oberfläche des Druckzylinders ein perfekter Kreis ist, möglich zu detektieren, ob der Mittelpunkt dieses Kreises mit der durch die Lager 30 definierten Drehachse zusammenfällt. Wenn dies nicht der Fall ist, kann das Ausmaß der Abweichung und ihre Winkelrichtung ebenfalls detektiert und aufgezeichnet werden. Im Prinzip kann all dies für jede Y-Position längs des Druckzylinders 18 geschehen. Außerdem ist es möglich zu detektieren, ob der Durchmesser des Druckzylinders 18 in Y-Richtung variiert. Zum Beispiel kann festgestellt werden, ob der Druckzylinder eine gewisse Konizität aufweist, d.h., ob sein Durchmesser vom einen Ende zum anderen leicht zunimmt. Ähnlich kann detektiert werden, ob der Druckzylinder sich im zentralen Bereich nach außen (positive Balligkeit) oder nach innen (negative Balligkeit) wölbt. Zusammenfassend ist es möglich, eine Anzahl von Parametern aufzunehmen, die den mittleren Durchmesser des Druckzylinders 18 sowie etwaige Abweichungen der Form der Umfangsfläche des Druckzylinders von einer perfekt zylindrischen Form angeben. Zudem ist der Abtastkopf 44 auch in der Lage, die Ränder der Druckplatten 26 zu detektieren und auch das Druckmuster, das durch die erhöhten (druckenden) und vertieften (nicht druckenden) Teile der Oberfläche der Druckplatten 26 definiert wird, zu "lesen".

Wenn die Druckplatten 26 an dem Druckzylinder 18 angebracht und daran befestigt sind, können die vom Abtastkopf 44 aufgenommenen Topographiedaten wahlweise dazu benutzt werden, eine etwaige Schräglage in der Position der Druckplatten 26 relativ zur Y-Achse zu überprüfen und ggf. zu korrigieren, so dass es möglich ist, die Druckplatten in perfekt ausgerichteten Positionen zu montieren.

Andererseits können für die Y- und φ-Positionen der Druckplatten 26 beträchtliche Montagetoleranzen zugelassen werden, obgleich diese Positionen einen Einfluss auf das Seitenregister und das Längsregister des zu druckenden Bildes haben. Der Grund besteht darin, dass mögliche Abweichungen von den Sollpositionen mit Hilfe des Abtastkopfes 44 mit hoher Genauigkeit detektiert und dann in einem späteren Stadium kompensiert werden können, wenn der Druckzylinder in der Druckmaschine 10 montiert worden ist.

Wenn der Druckzylinder 18 im Mounter 24 abgetastet worden ist, wird er aus dem Mounter entfernt, so dass er in eines der Farbdecks der Druckmaschine 10 eingesetzt werden kann. Wenn der Druckzylinder, der aus dem Mounter 24 entfernt wurde, z.B. den Druckzylinder im Farbdeck F ersetzen soll, so werden die mit Hilfe des Abtastkopfes 44 detektierten und in der Steuereinheit 40 gespeicherten Topographiedaten über irgendeinen geeigneten Kommunikationskanal 48 an eine Einstell-Steuereinheit 50 dieses Farbdecks übermittelt.

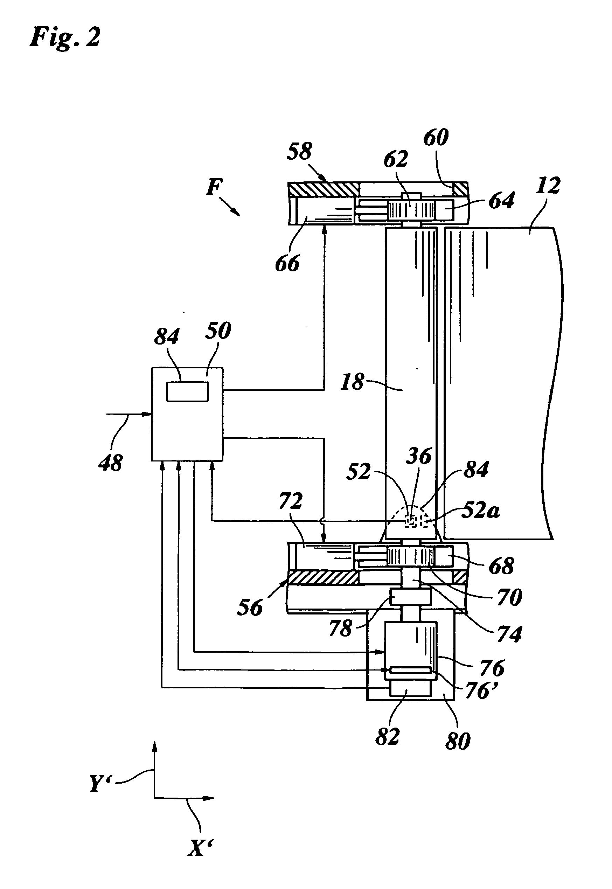

Wie weiter in Fig. 1 gezeigt ist, enthält jedes Farbdeck einen Detektor 52 zur Detektion der Referenzmarke 36 des in diesem Farbdeck montierten Druckzylinders. Durch Detektion der Position der Referenzmarke 36 mit dem Detektor 52, nachdem der Druckzylinder in dem Farbdeck F montiert worden ist, ist es somit möglich, die vom Mounter 24 erhaltenen Topographiedaten in ein lokales Koordinatensystem des Farbdecks zu transformieren. Dann kann die Position des Druckzylinders 18 in dem Farbdeck F auf der Grundlage dieser Daten eingestellt werden, wie nun im Zusammenhang mit Fig. 2 erläutert werden soll.

Fig. 2 zeigt nur einen Teil des Umfangs des CI 12 sowie gewisse Teile des Farbdecks F, die dazu dienen, den Druckzylinder 18 drehbar und einstellbar zu lagern. Diese Teile des Farbdecks umfassen stationäre Gestellelemente 56, 58 auf der Antriebsseite und der Bedienungsseite der Druckmaschine 10. Das Gestellelement 58 auf der Bedienungsseite hat ein Fenster 60, durch das, wenn der Druckzylinder ausgewechselt werden soll, der alte Druckzylinder entfernt und der neue eingeschoben wird. In der Praxis kann es zweckmäßig sein, statt den gesamten Druckzylinder 18 auszuwechseln, nur ein Druckzylindersleeve auszuwechseln, das, wie im Stand der Technik bekannt ist, mit Hilfe eines Luftkissens auf einen Zylinderkern aufgeschoben wird.

Das Gestellelement 58 trägt ein lösbares und entfernbares Lager 62, das ein Ende des Druckzylinders 18 lagert. Dieses Lager 62 ist entlang einer Führungsschiene 64 auf den CI 12 zu und von diesem weg verschiebbar, und ein Servomotor oder Aktor 66 ist dazu vorgesehen, das Lager 62 in kontrollierter Weise längs der Führungsschiene 64 zu bewegen.

Das Gestellelement 56 auf der Antriebsseite der Druckmaschine hat einen ähnlichen Aufbau und bildet eine Führungsschiene 68 und trägt ein Lager 70 und einen Servomotor oder Aktor 72. Hier erstreckt sich jedoch eine Achse 74 des Druckzylinders durch ein Fenster des Gestellelements 56 und ist über eine Kupplung 78 mit einer Ausgangswelle eines Antriebsmotors 76 verbunden. Der Antriebsmotor 76 ist auf einer Konsole 80 montiert, die längs des Gestellelements 56 verschiebbar ist, so dass der Antriebsmotor der durch den Aktor 72 gesteuerten Bewegung des Lagers 70 folgen kann. So kann die Position des Druckzylinders 18 relativ zu dem CI 12 längs einer Achse X' (definiert durch die Führungsschienen 64, 68) für jede Seite des Druckzylinders individuell eingestellt werden. Auf diese Weise ist es möglich, den Druck einzustellen, mit dem der Druckzylinder 18 auf die Bahn auf dem CI 12 drückt, und auch eine etwaige Konizität des Druckzylinders zu kompensieren.

Die Achse 74 des Druckzylinders 18 ist in den Lagern 62, 70 axial (in der Richtung einer Achse Y') verschiebbar, und der Antriebsmotor 76 weist einen integrierten Seitenregister-Aktor 76' zum Verschieben des Druckzylinders in Richtung der Achse Y' auf.

Weiterhin enthält der Antriebsmotor 76 einen Codierer 82 zur hochpräzisen Überwachung der Winkelstellung des Druckzylinders 18.

Der Detektor 52, der einen ähnlichen Aufbau wie der Detektor 38 im Mounter 24 aufweist, ist auf einer Konsole 84 angeordnet, die vom Gestellelement 56 vorspringt. So wird der Detektor 52 in einer Position gehalten, in der er der Referenzmarke 36 auf dem Druckzylinder zugewandt sein kann, und er kann zurückziehbar sein, so dass seine Position an unterschiedliche Zylindergrößen angepasst werden kann. Als eine Alternative kann der Detektor 52 so angeordnet sein, dass er in der Richtung Y' in eine feste Position in der Bewegungsbahn des Druckzylinders 18 bewegbar ist. Der Druckzylinder wird dann um einen von seinem Durchmesser abhängigen Weg längs der Achse X' bewegt, bis der Detektor die Referenzmarke lesen kann. Der Detektor wird dann zurückgezogen, um eine Kollision mit dem Druckzylinder zu vermeiden, und der Druckzylinder wird schließlich in die Druckposition bewegt. In diesem Fall braucht der Detektor nur zwischen zwei Positionen verstellt zu werden, nämlich einer Messposition und einer Bereitschaftsposition. Er kann deshalb mit einem Pneumatikzylinder oder einer einfachen Positioniereinrichtung bewegt werden.

Andere mögliche Einbauorte für den Detektor 52 (und einen später beschriebenen RFID Lese/Schreibkopf 52a) sind der Zwischenraum zwischen dem Druckzylinder und dem CI oder, bevorzugt, zwischen dem Druckzylinder und der Rasterwalze. Dies ermöglicht eine stationäre Anordnung des Detektors oder zumindest eine Verkürzung der Zustellwege zwischen der Messposition und der Bereitschaftsposition. Für die Zustellung kann ggf. auch der Antrieb für die Einstellung des Seitenregisters benutzt werden.

Wenn der Druckzylinder 18 im Farbdeck F montiert worden ist, wird der Antriebsmotor 76 in einer vorbestimmten Ruhestellung stillgehalten, und die Kupplung 78 kann einen herkömmlichen Nocken-und-Kerben-Mechanismus (nicht gezeigt) aufweisen, der sicherstellt, dass die Referenzmarke 36 grob mit dem Detektor 52 ausgerichtet wird. Der genaue Versatz der Referenzmarke 36 relativ zu dem Detektor 52 in Y'-Richtung und der genaue Winkelversatz werden dann auf die gleiche Weise gemessen wie im Zusammenhang mit dem Detektor 38 des Mounters beschrieben wurde. Die gemessenen Versatzdaten werden der Einstell-Steuereinheit 50 zugeführt, die auch Daten vom Codierer 82 und vom Seitenregister-Aktor 76' empfängt. Diese Daten erlauben es, die Winkelposition und die Y'-Position des Druckzylinders 18 in einem Maschinen-Koordinatensystem zu bestimmen.

Anhand der Topographiedaten, die über den Kommunikationskanal 48 übermittelt wurden, und anhand der vom Seitenregister-Aktor 76' gelieferten Y'-Position und der vom Detektor 52 gelieferten Versatzdaten berechnet die Steuereinheit 50 die Y'-Position des Druckmusters auf den Druckplatten 26 in dem Maschinen-Koordinatensystem und steuert dann den Aktor 76 so an, dass das Seitenregister präzise eingestellt wird.

Bevor dann ein Drucklauf mit dem neuen Druckzylinder 18 beginnt, wird der Antriebsmotor 76 eingeschaltet, um den Druckzylinder 18 mit einer Umfangsgeschwindigkeit zu drehen, die gleich derjenigen des CI 12 ist, und die Winkelpositionen des Druckzylinders 18 werden auf der Grundlage der vom Codierer 82 gelieferten Daten überwacht. Anhand der Topographiedaten und der Versatzdaten vom Detektor 52 berechnet die Steuereinheit 50 die aktuellen Winkelpositionen des Druckmusters auf den Druckplatten 26 und verzögert oder beschleunigt den Antriebsmotor 76, um so das Längsregister einzustellen.

Die Steuereinheit 50 enthält weiterhin einen Speicher 84, in dem Kalibrierungsdaten gespeichert sind. Diese Kalibrierungsdaten umfassen z.B. die X-Position des CI 12 am Spalt mit dem Druckzylinder 18, die Steifigkeit der Lagerstruktur für den Druckzylinder 18, die Eigenschaften der Bahn 20, der Tinte, die in dem bevorstehenden Drucklauf verwendet werden soll, und dergleichen. Da die X'-Richtung, die durch die Führungsschienen 64, 68 definiert wird, nicht notwendigerweise senkrecht auf der Oberfläche des CI 12 an dem mit dem Druckzylinder 18 gebildeten Spalt steht, können die Kalibrierungsdaten auch den Winkel enthalten, der zwischen der Normalen auf der Oberfläche des CI und der X'-Richtung eingeschlossen ist.

Auf der Grundlage der Eigenschaften der Tinte und der Eigenschaften der Bahn 20 sowie auf der Grundlage der Topographiedaten, die sich auf die mittlere optische Dichte des zu druckenden Bildes beziehen, ist es möglich, einen Soll-Liniendruck zu bestimmen, mit dem der Druckzylinder 18 gegen die Bahn angedrückt werden sollte. Auf der Grundlage der Topographiedaten, die die geometrische Form der durch den Druckzylinder 18 definierten Druckfläche angeben, und auf der Grundlage der oben erwähnten Kalibrierungsdaten ist es dann möglich, Sollwerte für die X'-Positionen zu bestimmen, auf welche die Aktoren 66 und 72 eingestellt werden müssen, um einen optimalen Liniendruck zu erhalten. Auf einen Befehl, das Drucken mit dem Farbdeck F zu beginnen, steuert dann die Steuereinheit 50 die Aktoren 66 und 72, um den Druckzylinder 18 auf die geeignete Druckposition einzustellen.

Es versteht sich, dass die oben im Zusammenhang mit Fig. 2 beschriebenen Einstellmechanismen für die Druckzylinder 18 jedes der Farbdecks A-J vorgesehen sind.

Obgleich dies in der Zeichnung nicht dargestellt ist, sind außerdem Einstellmechanismen mit einem analogen Aufbau für jede der Rasterwalzen 16 vorgesehen, und Verfahren ähnlich den oben beschriebenen werden dazu eingesetzt, die Rasterwalzen angemessen einzustellen, insbesondere hinsichtlich des Liniendruckes zwischen der Rasterwalze und dem Druckzylinder.

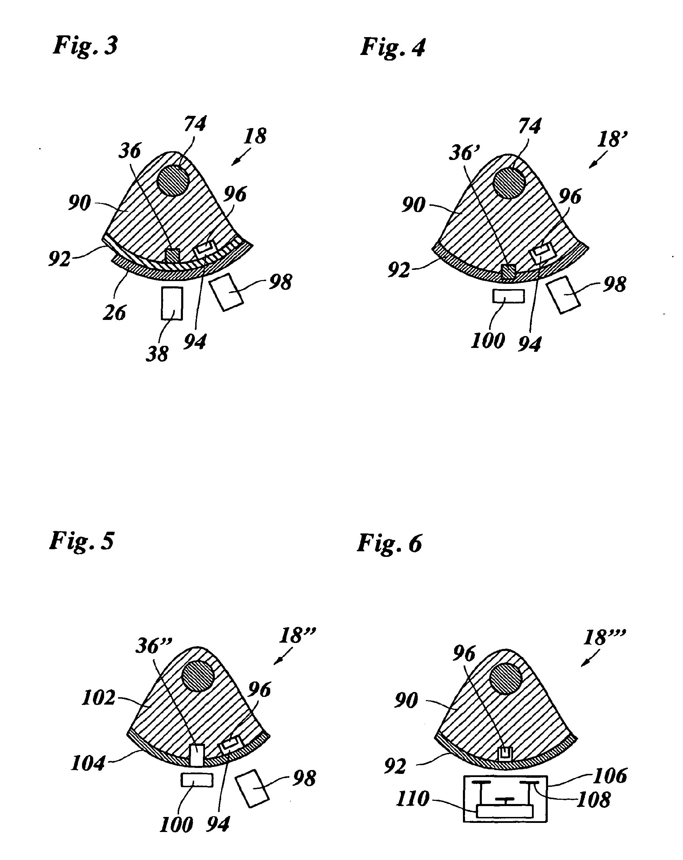

Fig. 3 zeigt einen Teilquerschnitt des Druckzylinders 18, der in der in Fig. 1 gezeigten Ausführungsform verwendet wird. Der Druckzylinder 18 weist eine Hülse 90 auf, die auf der Achse 74 montiert ist und z.B. in der Hauptsache aus Kohlefasern bestehen kann. Auf der äußeren Umfangsfläche der Hülse 90 ist eine Polymerschicht 92 gebildet. Die Druckplatten 26 sind auf der äußeren Umfangsfläche der Polymerschicht 92 montiert.

Im gezeigten Beispiel wird die Referenzmarke 36 durch einen Magneten gebildet, der in die aus Kohlefasern bestehende Hülse 90 eingebettet ist und durch die Polymerschicht 92 und die Druckplatte 26 bedeckt ist. Wahlweise kann der Magnet auch in die Polymerschicht 92 eingebettet sein. In jedem Fall ist der die Referenzmarke 36 bildende Magnet so angeordnet, dass sein Magnetfeld die Druckplatte 26 durchdringt und von dem Detektor 38 sowie auch von dem Detektor 52 in der Druckmaschine detektiert werden kann.

Die Hülse 90 bildet außerdem eine Ausnehmung 94, die von der Polymerschicht 92 bedeckt ist und einen RFID-Chip 96 aufnimmt. Die Ausnehmung 94 befindet sich in derselben axialen Position wie die Referenzmarke 36, ist jedoch gegenüber dieser winkelversetzt.

Der Mounter 24 weist einen Schreibkopf 98 auf, der so angeordnet ist, dass er dem RIFD-Chip 96 gegenüberliegt, wenn der Detektor 38 der Referenzmarke 36 gegenüberliegt. Der Schreibkopf dient dazu, die vom Detektor 38 detektierten Versatzdaten und die vom Abtastkopf 44 detektierten Topographiedaten auf den RFID-Chip 96 zu schreiben, und ist somit Teil des in Fig. 1 gezeigten Kommunikationskanals 48. Dieser Kommunikationskanal enthält weiterhin einen Lesekopf oder Lese/Schreibkopf 52a (Fig. 2), der benachbart zu dem Detektor 52 im Farbdeck der Druckmaschine angeordnet ist, um die Daten vom RFID-Chip 96 zu lesen. Vorzugsweise werden die Daten vom RFID-Chip 96 zu der Zeit gelesen, wenn der Detektor 52 in der Druckmaschine die Position der Referenzmarke 36 detektiert.

Wenn die Datenkapazität des RFID-Chips begrenzt ist, können auf dem Chip "komprimierte" Daten gespeichert werden, die beispielsweise nur die Zustellwerte und ggf. den Versatz der Druckplatten 26 umfassen.

Auf dem RFID-Chip können auch zusätzliche Daten gespeichert sein, die sich z.B. auf Steifigkeitseigenschaften des Druckzylinders beziehen. Weiterhin kann der Lese/Schreibkopf 52a dazu verwendet werden, Daten wie z.B. Rückkopplungsdaten auf den RFID-Chip zu schreiben. Wenn sich z.B. herausstellt, dass die nach dem erfindungsgemäßen Verfahren vorgenommenen Einstellungen doch kein optimales Resultat ergeben und die Einstellungen deshalb von Hand korrigiert werden müssen, können die Korrekturen auf dem Chip gespeichert werden, so dass sie unmittelbar verfügbar sind, wenn derselbe Druckzylinder das nächste Mal verwendet wird. Alternativ können die Korrekturen auch Teil der Kalibrierungsdaten sein und in einem Speicher gespeichert werden, der dem Farbdeck der Druckmaschine zugeordnet ist.

Die Rasterwalze 16 kann einen ähnlichen Aufbau haben wie der Druckzylinder 18, mit einem RFID-Chip 96, jedoch ohne Referenzmarke 36. Anstelle der Polymerschicht 92 wird die Rasterwalze z.B. eine Keramikschicht aufweisen, die ein Raster von farbaufnehmenden Zellen der Rasterwalze bildet. Zum Abtasten der Oberfläche der Rasterwalze und zum Aufnehmen der Topographiedaten kann die Rasterwalze in dem Mounter 24 montiert werden, so dass die Oberfläche mit dem Abtastkopf 44 abgetastet werden kann. Als eine weitere Option kann der RFID-Chip schon bei der Herstellung der Rasterwalze programmiert werden und Daten wie z.B. die Zellendichte und das Zellenvolumen enthalten, die an die Druckmaschine übermittelt und der Bedienungsperson zur Information angezeigt werden, sowie ggf. Nachstellwerte für die berechnete Druckposition in Bezug auf die Druckeinstellung.

Fig. 4 zeigt einen Druckzylinder 18', bei dem das Druckmuster direkt auf der Oberfläche der Polymerschicht 92 gebildet wird. In diesem Beispiel wird die Referenzmarke durch einen Metallblock 36' gebildet, der in die Hülse 90 und ggf. einen Teil der Polymerschicht 92 eingebettet, jedoch noch von einem äußeren Teil der Polymerschicht bedeckt ist. Ein dreiachsiger induktiver Positionsdetektor 100 wird zum Detektieren des als Referenzmarke dienenden Metallblocks 36' verwendet.

Fig. 5 zeigt einen Tiefdruckzylinder 18" mit einem Metallkörper 102 und einem äußeren Stahlmantel 104, in dessen Oberfläche das Druckmuster gebildet ist. Die Referenzmarke wird durch eine Ausnehmung 36" in dem Körper 102 und dem Stahlmantel 104 gebildet. Somit kann die Position der Referenzmarke wieder mit dem induktiven Positionsdetektor 100 detektiert werden. Dieser Positionsdetektor sowie der Schreibkopf 98 können in diesem Fall in ein Gravurgerät integriert sein, das zur Erzeugung des Druckmusters auf dem Stahlmantel 104 verwendet wird. Ebenso wird das Abtastsystem mit dem Abtastkopf 44 in das Gravurgerät integriert sein. Da die Ausnehmung 94, die den RFID-Chip 96 aufnimmt, von dem Stahlmantel 104 bedeckt ist, haben die von dem RFID-Chip gesendeten und empfangenen Radiosignale eine solche Frequenz, dass sie den Stahlmantel 104 durchdringen können. Es versteht sich, dass der Tiefdruckzylinder 18", der in Fig. 5 gezeigt ist, für den Einbau in eine Tiefdruckmaschine vorgesehen ist, deren Farbdecks ähnlich wie bei den zuvor beschriebenen Ausführungsbeispielen mit Detektoren und RFID-Leseköpfen zum Detektieren der Referenzmarke und der Topographiedaten ausgerüstet sind.

Fig. 6 zeigt einen Druckzylinder 18"', der den gleichen allgemeinen Aufbau wie der in Fig. 4 gezeigte Zylinder hat, bei dem jedoch der RFID-Chip 96 zugleich als Referenzmarke dient. Dementsprechend ist ein Schreib- und Detektionskopf 106 des Mounters oder des Vorbereitungsgestells 86 dazu eingerichtet, nicht nur Daten auf den RFID-Chip 96 zu schreiben, sondern auch die exakte Position des als Referenzmarke dienenden Chips 96 zu detektieren. Zu dem Zweck kann der Schreib- und Detektionskopf 106 mehrere Antennenelemente 108 und eine Detektionsschaltung 110 aufweisen, die die Position des Chips auf der Grundlage der von diesem gesendeten Radiosignale z.B. mit interferometrischen Verfahren detektiert.

Selbstverständlich ist ein Lese/Schreib- und Detektionskopf analog zu dem Kopf 106 im Farbdeck der Druckmaschine vorgesehen. Je nach Art der verwendeten Lese-, Schreib- und Detektionsalgorithmen kann es auch möglich sein, mit dem Kopf in dem Vorbereitungsgestell und/oder dem Farbdeck Daten zu lesen und zu schreiben und/oder die Referenzmarke zu detektieren, während die Walze rotiert. Fortgesetzte oder wiederholte Detektion der Referenzmarke in der Druckmaschine bietet den Vorteil, dass eine etwaige Drift des Längsregisters und des Seitenregisters bei laufender Druckmaschine detektiert und korrigiert werden kann.

Natürlich kann diese Technologie auch bei dem in Fig. 3 gezeigten Druckzylinder eingesetzt werden, auf dem Druckplatten montiert sind.

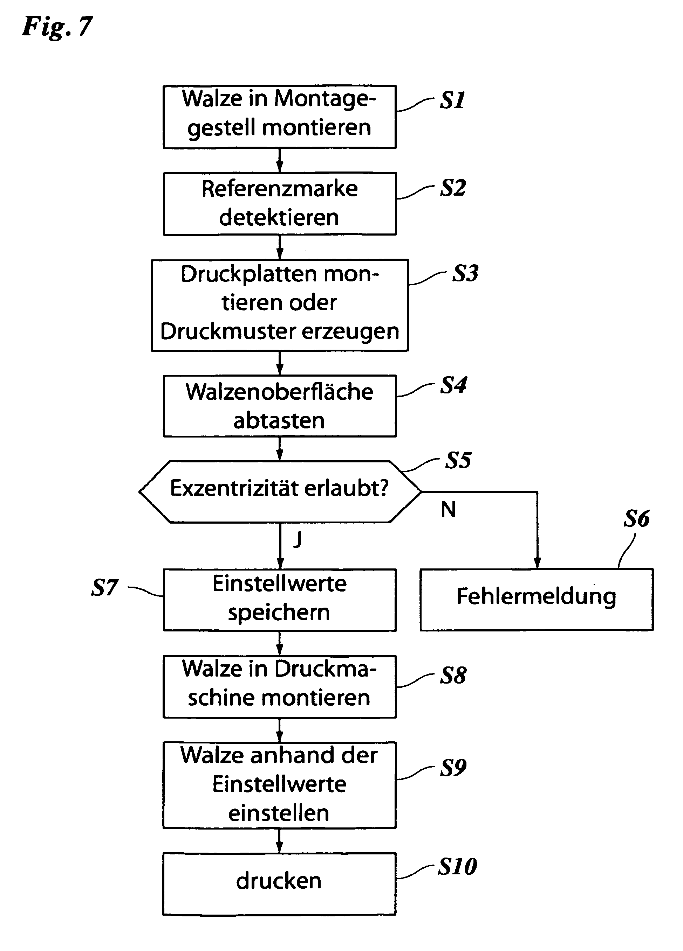

Fig. 7 ist ein Flussdiagramm, das die wesentlichen Schritte des Verfahrens gemäß der Erfindung zusammenfasst.

In Schritt S1 wird die Walze, z.B. einer der Druckzylinder 18, 18', 18", 18"' oder die Rasterwalze 16, in einem Vorbereitungsgestell, etwa dem Mounter 24 montiert.

In Schritt S2 wird die Referenzmarke detektiert. In diesem Schritt ist es möglich, die Winkelstellung und die axiale Position der Walze einzustellen, bis die Referenzmarke präzise mit dem Detektor ausgerichtet ist, so dass keine Versatzdaten gemessen und an die Einstell-Steuereinheit 50 in dem Farbdeck übermittelt zu werden brauchen. In einer bevorzugten Ausführungsform wird jedoch die Referenzmarke nur grob mit dem Detektor ausgerichtet und es werden Versatzdaten gemessen, so dass der Prozess der Montage und Ausrichtung der Walze im Vorbereitungsgestell vereinfacht wird.

Wenn die Walze ein Druckzylinder ist, werden in Schritt S3 die Druckplatten auf dem Druckzylinder montiert oder es wird ein Druckmuster gebildet. Im Fall einer Rasterwalze kann dieser Schritt ausgelassen werden.

In Schritt S4 wird die Oberfläche der Walze mit dem Abtastkopf 44 abgetastet, um die Topographiedaten aufzunehmen. Diese Daten können in der Steuereinheit 40 des Vorbereitungsgestells (Mounter 24) einer ersten Analyse unterzogen werden, um z.B. die Exzentrizität der Walze zu bestimmen. Dann wird in Schritt S5 geprüft, ob die Exzentrizität innerhalb bestimmter Grenzen liegt, die eine zufriedenstellende Druckqualität sicherstellen. Wenn dies nicht der Fall ist, wird in Schritt S6 eine Fehlermeldung ausgegeben. Andernfalls werden die (nicht kalibrierten) Einstelldaten für das Seitenregister, das Längsregister und die X'-Position der Walze berechnet und in Schritt S7 gespeichert.

In einer modifizierten Ausführungsform können die Exzentrizitätsdaten in den Einstelldaten enthalten sein, und sie können dann von der Steuereinheit 50 der Druckmaschine dazu verwendet werden, die Aktoren 66, 72 während der gesamten Betriebszeit der Druckmaschine synchron mit der Drehung der Walze anzusteuern, um so die Exzentrizität der Walze zu kompensieren. In diesem Fall kann der Schritt S5 ausgelassen werden oder es können größere Toleranzen für die Exzentrizität akzeptiert werden.

Im Anschluss an den Schritt S7 wird die Walze aus dem Vorbereitungsgestell entfernt und in dem betreffenden Farbdeck der Druckmaschine montiert (Schritt S8).

Dann werden in Schritt S9 die Daten für das Farbdeck und den Drucklauf kalibriert, die Referenzmarke wird mit dem Detektor 52 in der Druckmaschine detektiert, und die Walze wird eingestellt, wie im Zusammenhang mit Fig. 2 beschrieben wurde.

Wenn der Einstellprozess abgeschlossen ist, kann der Drucklauf unmittelbar in Schritt S10 beginnen, und er wird Bilder von hoher Qualität auf der Bahn 20 liefern, ohne dass Makulatur produziert wird.

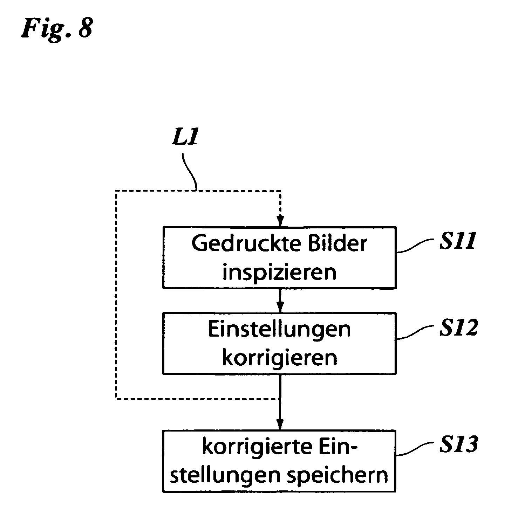

Wenn die Druckmaschine in Schritt S10 in Fig. 7 gestartet worden ist, kann die Einstellung der Walze in der Druckmaschine verfeinert werden, indem die in Fig. 8 gezeigten Schritte S11-S13 ausgeführt werden. Wenn die Druckmaschine läuft und Bilder auf die Bahn gedruckt werden, wird in Schritt S11 die Qualität der Bilder inspiziert, entweder visuell durch eine menschliche Bedienungsperson oder automatisch mit Hilfe eines Kamerasystems und elektronischer Bildverarbeitung. Wenn sich herausstellt, dass die Qualität der Bilder nicht optimal ist, werden die Einstellungen in Schritt S 12 korrigiert. Eine symbolische Schleife L1 in Fig. 8 deutet an, dass die Schritte S11 und S 12 so oft wie erforderlich wiederholt werden können, bis die gewünschte Druckqualität erreicht worden ist. Wenn schließlich die optimalen Einstellungen gefunden worden sind, werden die korrigierten Einstellungen auf einem Datenträger gespeichert, der der Walze zugeordnet ist, z.B. indem mit Hilfe des Lese/Schreibkopfes 52a auf den RFID-Chip geschrieben wird.

Wenn dieselbe Walze in einem späteren Drucklauf in derselben Druckmaschine verwendet wird, so sind die Korrekturen, die während des ersten Drucklaufes in Schritt S 12 vorgenommen wurden, für diese Walze verfügbar, und sie können erneut von dem Lese/Schreibkopf 52a gelesen werden, so dass der Einstellprozess dann auf den korrigierten und dadurch verbesserten Einstelldaten beruht.

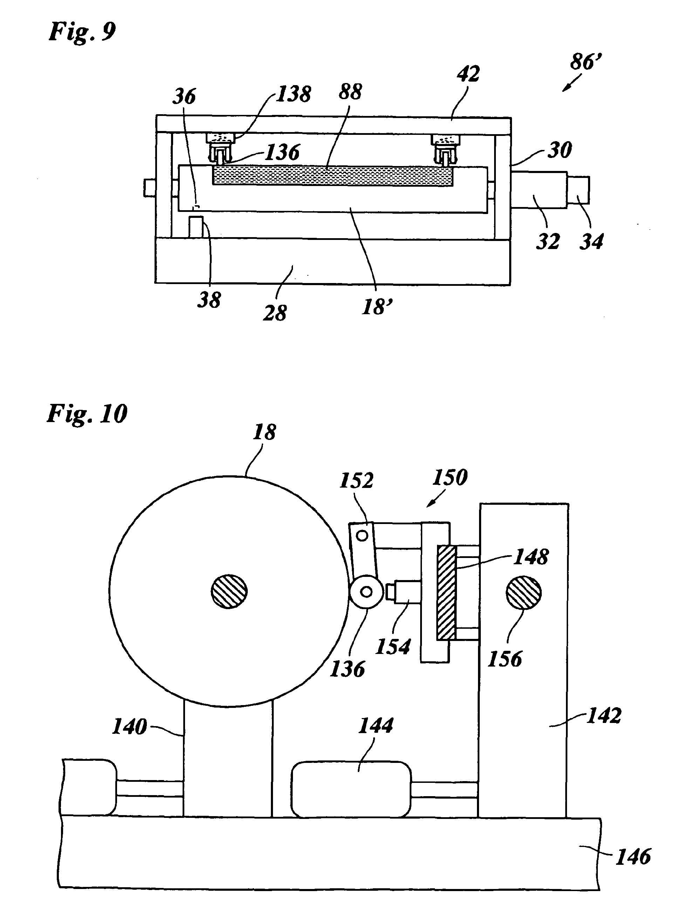

Fig. 9 zeigt ein Vorbereitungsgestell 86', das ähnlich wie das Vorbereitungsgestell 86 in Fig. 2 aufgebaut ist und bei dem als Abtastkopf zwei Tastrollen 136 vorgesehen sind, die an der Umfangsfläche des Druckzylinders 18' abrollen, vorzugsweise in der Nähe der beiden Enden dieses Druckzylinders, jeweils am Ende des Druckmusters 88. Jede Tastrolle ist elastisch gegen die Umfangsfläche des Druckzylinders 18' vorgespannt und an einem hochpräzisen Weggeber 138 gelagert, der seinerseits an der Schiene 42 montiert ist.

Die Positionen der Weggeber 138 an der Schiene 42 können einstellbar sein, und es können ggf. auch mehr als zwei Weggeber mit zugehörigen Abtastrollen vorgesehen sein. Mit dieser Ausführungsform ist es möglich, zumindest die Exzentrizität und den genauen Durchmesser des Druckzylinders zu messen und zwar jeweils an den Enden des druckenden Bereichs, so dass auch eine etwaige Konizität des Druckzylinders feststellbar ist. Gemäß einer weiteren, nicht gezeigten Ausführungsform kann anstelle der Tastrolle 136 auch eine allseitig drehbar gelagerte Tastkugel vorgesehen sein, und der zugehörige Weggeber kann längs der Schiene 42 verschiebbar sein, so dass sich das gesamte Oberflächenprofil des Druckzylinders aufnehmen lässt.

Der Durchmesser der Tastrolle 136 bzw. der Tastkugel sollte so gewählt werden, dass einerseits der Rollwiderstand hinreichend klein ist, andererseits jedoch die träge Masse so klein ist, dass der Weggeber dem Oberflächenverlauf des Druckzylinders schnell genug folgen kann. Wahlweise kann die Tastrolle und das zugehörige Lager auch mit Hilfe eines schwenkbaren Arms an der Schiene 42 gehalten sein. In dem Fall misst der Weggeber die Winkelauslenkung dieses Armes.

Selbstverständlich ist die in Fig. 9 gezeigte Ausbildung analog auch bei dem Mounter 24 nach Fig. 1 anwendbar. In dem Fall kann ggf. mit Hilfe der Tastrollen auch die Lage der Druckplatten 26 zumindest in Umfangsrichtung des Druckzylinders gemessen werden.

In Figur 10 ist ein weitere mögliche Ausgestaltung eines mechanischen Abtastsystems mit einer Tastrolle 136 illustriert. Der Druckzylinder 18 ist drehbar auf Lagerböcken 140 gelagert, während das Abtastsystem an gesonderten Lagerböcken 142 gehalten ist. Mindestens einer der Sätze der Lagerböcke 140, 142 ist mit Hilfe eines numerisch gesteuerten Antriebs 144 in kontrollierbarer Weise längs einer rechtwinklig zur Achse des Druckzylinders 18 verlaufenden Schiene 146 verfahrbar.

An den Lagerböcken 142 ist eine parallel zum Druckzylinder 18 verlaufenden biegesteife Führungsschiene 148 montiert, an der ein Halter 150 für die Tastrolle 136 verstellbar angeordnet ist. Die Tastrolle 136 ist mit Hilfe eines Armes 152 pendelnd an dem Halter 150 aufgehängt, so dass sie aufgrund ihres Eigengewichts (und gegebenenfalls eines Zusatzgewichtes) am Druckzylinder 18 anliegt und an dessen Umfangsfläche abrollt. An dem Halter 150 ist außerdem ein Wirbelstrom-Abstandssensor 154 so angeordnet, dass er der Umfangsfläche der aus Metall bestehenden Tastrolle 136 zugewandt ist und dem Druckzylinder 18 diametral gegenüberliegt. Der Abstandssensor 154 ist dazu eingerichtet, die Breite des zwischen diesem Sensor und der Umfangsfläche der Tastrolle 136 gebildeten Spaltes präzise zu messen. Aufgrund der pendelnden Aufhängung der Tastrolle variiert die Breite dieses Spaltes entsprechend der Topographie der Oberfläche des Druckzylinders 18.

Der Vorteil dieser Anordnung besteht darin, dass der Abstandssensor direkt die Oberfläche der am Druckzylinder 18 abrollenden Tastrolle 136 detektiert, so dass etwaige Ungenauigkeiten in der Lagerung der Tastrolle die Meßgenauigkeit nicht beeinträchtigen. Dies erlaubt eine schnelle und präzise Messung des Oberflächenprofils des Druckzylinders 18 (oder irgendeines anderen Zylinders) an der Axialposition, auf die der Halter 150 eingestellt ist. Natürlich können auch mehrere Halter 150 längs der Führungsschiene 148 angeordnet sein, damit der Druckzylinder 18 an mehreren Stellen vermessen werden kann. Die Messpositionen können dabei vom Personal so gewählt werden, dass das Oberflächenprofil an den besonders kritischen Stellen des Druckzylinders 18 aufgenommen wird.

Für eine Messung werden die Lagerböcke 142 in eine Position gefahren, in der die Tastrolle 136 in der in Figur 18 gezeigten Weise am Umfang des Druckzylinders 18 anliegt und etwas ausgelenkt wird. Zwischen der Tastrolle und dem Abstandssensor 154 sollte dabei jedoch ein Spalt verbleiben, der mindestens der erwarteten Maßtoleranz des Druckzylinders 18 entspricht. Die Position der Stelle der Umfangsfläche des Druckzylinders 18, die von der Tastrolle 136 berührt wird und die vorzugsweise auf gleicher Höhe mit der Drehachse des Druckzylinders liegt, ergibt sich dann aus der bekannten Einstellposition der Lagerböcke 142, der bekannten Geometrie des Halters 150, dem Durchmesser der Tastrolle 136 und dem vom Abstandssensor gemessenen Wert. Ein wesentlicher Vorteil dieser mechanischen Abtastung besteht darin, dass das Messergebnis unabhängig von dem Material und der Beschaffenheit der Oberfläche des Druckzylinders 18 bzw. der darauf montierten Druckplatten ist.

Wahlweise lässt sich dieses Messprinzip auch mit einer Laser-Abtastung kombinieren. Mit Hilfe des Lasers kann dann die Oberfläche des Druckzylinders auf ganzer Breite mit geringer Auflösung gescannt werden, und an den Stellen, an denen eine genaue Kenntnis des Oberflächenprofils erwünscht ist, werden dann die Halter 150 positioniert, so dass mit Hilfe der Tastrollen das Profil präzise vermessen werden kann.

Das Abtastsystem nach Fig. 10 kann in einen Mounter oder irgendein anderes Vorbereitungsgestell integriert sein. Figur 18 zeigt eine Trägerstange 156.

Anstelle des Wirbelstrom-Abstandssensors 154 können auch andere berührungslose Sensortypen eingesetzt werden, beispielsweise ein optischer Sensor.

Es sind sogenannte chromatische Abstandssensoren bekannt, bei denen die abzutastende Oberfläche mit Weißlicht bestrahlt wird und das von der Oberfläche reflektierte oder gestreute Licht durch eine Linse gebündelt wird. Da die Brechzahl der Linse für verschiedene Farben des Lichts verschieden ist, ist die Brennweite der Linse für verschiedene Farbkomponenten verschieden, so dass die Farbe, die von einem farbsensitiven optischen Element in der Nähe des Brennpunktes gemessen wird, vom Abstand der reflektierenden Oberfläche abhängig ist und somit eine Messung des Abstands erlaubt. Bei der gemessenen Oberfläche kann es sich dabei wahlweise um die Oberfläche der Tastrolle 136 oder direkt um die Oberfläche des Druckzylinders 18 handeln.

## Patentansprüche

1. Verfahren zur Einstellung einer Walze (16, 18) in einer Rotationsdruckmaschine (10), mit den Schritten:
a) Montieren der Walze in einem Vorbereitungsgestell (24; 86), in dem die Walze drehbar gelagert wird,
b) Abtasten der Umfangsfläche der Walze, um so eine Topographie der Walzenoberfläche zu detektieren, die den Abstand von spezifischen Punkten auf der Oberfläche der Walze von der Drehachse der Walze angibt,
c) Ableiten von Einstelldaten für die Einstellung der Walze aus den Topographiedaten und Speichern der Einstelldaten,
d) Montieren der Walze (16, 18) in der Druckmaschine (10) und
e) Einstellen der Walze anhand der Einstelldaten,
**dadurch gekennzeichnet, dass** die Umfangsfläche der Walze in Schritt b) mit einer Tastrolle (136) abgetastet wird.

2. Montagegestell (24) für die Montage von Druckplatten (26) auf einem Druckzylinder (18), zur Verwendung bei dem Verfahren nach Anspruch 1, welches Montagegestell dazu ausgebildet ist, den Druckzylinder (18) drehbar zu lagern, und
ein Abtastsystem zum Abtasten der Oberfläche des Druckzylinders (18) mit den darauf montierten Druckplatten (26) aufweist, zur Detektion der Oberflächentopographie des Druckzylinders;
**dadurch gekennzeichnet, dass** das Abtastsystem eine Tastrolle (136) und einen Detektor (38) zur Detektion einer Referenzmarke (36) auf dem Druckzylinder aufweist.

## Claims

1. Method for adjusting a roller (16, 18) in a rotary printing machine (10), comprising the steps of:
a) mounting the roller in a preparation rack (24; 86) in which the roller is rota-tably supported,
b) scanning the peripheral surface of the roller so as to detect a topography of the surface of the roller, which topography indicates the distance of specific points on the surface of the roller from the axis of rotation of roller,
c) deriving set data for the adjustment of the roller from the topography data and storing the set data,
d) mounting the roller (16, 18) in the printing machine (10), and
e) adjusting the roller on the basis of the set data,
**characterized in that** the peripheral surface of the roller is scanned in step b) with a follower roll (136).

2. Mounting rack (24) for mounting printing plates (26) on a printing cylinder (18), for use in the method according to claim 1, wherein the mounting rack is adapted to rota-tably support the printing cylinder (18) and comprises
a scanning system for scanning the surface of the printing cylinder (18) with the printing plates (26) mounted thereon, for detecting the surface topography of the printing cylinder,
**characterized in that** the scanning system has a follower roller (136) and a detector (38) for detecting a reference mark (36) on the printing cylinder.

## Revendications

1. Procédé de réglage d'un cylindre (16, 18) dans une machine à imprimer rotative (10), comportant les étapes consistant à :
a) monter le cylindre dans un châssis de préparation (24 ; 86) dans lequel le cylindre est supporté en rotation,
b) balayer la surface circonférentielle du cylindre afin de détecter une topographie de la surface de rouleau qui indique la distance entre des points spécifiques sur la surface du cylindre et l'axe de rotation du rouleau,
c) obtenir des données de réglage pour le réglage du cylindre à partir des données topographiques et enregistrer les données de réglage,
d) monter le cylindre (16, 18) dans la machine à imprimer (10) et
e) régler le cylindre au moyen des données de réglage,
**caractérisé en ce que** la surface circonférentielle du cylindre à l'étape b) est balayée en utilisant un rouleau palpeur (136).

2. Châssis de montage (24) pour le montage de plaques d'impression (26) sur un cylindre d'impression (18), pour une utilisation dans le procédé selon la revendication 1, lequel châssis de montage est configuré de manière à supporter le cylindre d'impression (18) en rotation, et
comportant un système de balayage pour balayer la surface du cylindre d'impression (18) avec les plaques d'impression (26) montées sur celui-ci, afin de détecter la topographie de surface du cylindre d'impression,
**caractérisé en ce que** le système de balayage comporte un rouleau palpeur (136) et un capteur (38) pour détecter une marque de référence (36) sur le cylindre d'impression.
